# EUROPÄISCHE PATENTSCHRIFT

(11) **EP 3 253 899 B1**
(45) Veröffentlichungstag und Bekanntmachung des Hinweises auf die Patenterteilung: **25.03.2020**
(21) Anmeldenummer: 16704389.2
(22) Anmeldetag: 29.01.2016
(51) Int. Cl.: C22F 1/08, C22C 9/00

(54) **VERFAHRN ZUR HERSTELLUNG EINES VERBINDUNGSELEMENTS, NÄMLICH EINES NIETS, EINES BOLZENS ODER EINER MUTTER**
PROCESS FOR THE MANUFACTURE OF A CONNECTING ELEMENT, NAMELY A RIVET, A BOLT OR A NUT
PROCÉDÉ DE FABRICATION D'UN ÉLÉMENT DE LIAISON, NOTAMMENT UN RIVET, UN BOULON OU ÉCROU

(30) Priorität: 02.02.2015 DE 102015001293
(43) Veröffentlichungstag der Anmeldung: 13.12.2017
(73) Patentinhaber: Isabellenhütte Heusler GmbH & Co. Kg, 35683 Dillenburg (DE)
(72) Erfinder: MARIEN, Jan, 35745 Herborn (DE); HARTMANN, Jens, 35713 Eschenburg (DE); ZUCKERMANN, Daniel, 35745 Herborn (DE)
(74) Vertreter: v. Bezold & Partner Patentanwälte - PartG mbB
(86) Internationale Anmeldenummer: PCT/EP2016/000155
(87) Internationale Veröffentlichungsnummer: WO 2016/124322

(56) Entgegenhaltungen:
- EP-A1- 2 557 187
- EP-A1- 2 752 498
- US-A1- 2001 051 105

## Beschreibung

Die Erfindung betrifft ein Herstellungsverfahren für ein Verbindungselement (Niet, Bolzen oder Mutter) zum mechanischen Verbinden von Bauteilen.

Aus dem Stand der Technik (z. B. DE 10 2005 059 561 A1) sind Stromschienenanordnungen bekannt, bei denen zwei stromführende Stromschienen aus hochleitfähigem Kupfer durch eine Schraube miteinander verbunden werden, um eine elektrische und mechanische Verbindung zwischen den beiden Stromschienen herzustellen. Die beiden Stromschienen liegen hierbei im Bereich der Schraubverbindung planparallel aufeinander, was zu einem geringen elektrischen Übergangswiderstand zwischen den beiden Stromschienen führt. Allerdings ist der Übergangswiderstand zwischen den beiden Stromschienen nicht Null, was insbesondere auf die Oberflächenrauigkeit der Stromschienen und eine etwaige Verschmutzung der aufeinander liegenden Oberflächen der Stromschienen zurückgeführt werden kann. Nachteilig an den bekannten Stromschienenanordnungen ist also der elektrische Übergangswiderstand zwischen den miteinander verbundenen Stromschienen.

Aus DE 103 92 428 T5 ist ein hochfester Leitkupferlegierungsdraht bekannt, der beispielsweise als Batteriepol oder als Elektrokabel eingesetzt werden kann. Hierbei handelt es sich also nicht um ein Verbindungselement in dem erfindungsgemäßen Sinne.

Weiterhin offenbart DE-AS 1 458 546 einen Halbleiterträger, der als solcher gattungsfremd ist.

Aus US 2001/0051105 A1 und EP 2 752 498 A1 sind elektrische Verbindungsmittel bekannt. Derartige elektrische Verbindungselemente sind ja grundsätzlich von mechanischen Verbindungselementen zu unterscheiden. 10

Zum allgemeinen technischen Hintergrund der Erfindung wird auch hingewiesen auf EP 2 557 187 A1.

Der Erfindung liegt deshalb die Aufgabe zugrunde, den Übergangswiderstand bei einer solchen Stromschienenanordnung zu verringern.

Diese Aufgabe wird durch ein erfindungsgemäßes Herstellungsverfahren für ein Verbindungselement (Niet, Bolzen oder Mutter) gemäß dem Hauptanspruch gelöst.

Die Erfindung beruht auf der technisch-physikalischen Erkenntnis, dass bei einer Stromschienenanordnung ein Teil des elektrischen Strom durch das Verbindungselement (z. B. Schraube, Mutter) fließt, so dass das Verbindungselement einen möglichst geringen Widerstand bilden sollte.

Die Erfindung umfasst deshalb die technische Lehre, das Verbindungselement (Niet, Bolzen oder Mutter) bei einer solchen Stromschienenanordnung aus einem Material herzustellen, das nicht nur eine ausreichende mechanische Zugfestigkeit aufweist, sondern auch eine sehr hohe elektrische Leitfähigkeit, um einen möglichst geringen elektrischen Übergangswiderstand zwischen zwei Stromschienen realisieren zu können. Diese Zielanforderungen sind jedoch leider teilweise widersprüchlich, da eine hohe mechanische Zugfestigkeit meist nicht mit einer sehr hohen elektrischen Leitfähigkeit kombiniert werden kann. So hat Kupfer beispielsweise eine sehr hohe elektrisch Leitfähigkeit, aber nur eine relativ geringe mechanische Zugfestigkeit, so dass beispielsweise Schrauben nicht aus Kupfer gefertigt werden. Die Erfindung löst jedoch diesen Zielkonflikt durch die Verwendung eines geeigneten Materials für das Verbindungselement, wie noch detailliert beschrieben wird.

Im Folgenden werden jedoch zunächst die Materialeigenschaften des Materials des erfindungsgemäßen Verbindungselements beschrieben.

So weist das Material des Verbindungselements vorzugsweise eine mechanische Zugfestigkeit von mindestens 350 MPa, 400 MPa, 450 MPa, 500 MPa, 550 MPa oder sogar mindestens 600 MPa auf, was für die Herstellung mechanischer Schraubverbindungen meist ausreicht.

Die elektrische Leitfähigkeit des Materials des Verbindungselements - gemessen auf der IACS-Skala (IACS: International Annealed Copper Standard) - beträgt dagegen mindestens 50% IACS, 60% IACS, 70% IACS, 80% IACS oder sogar mindestens 90% IACS. Ein IACS-Wert von 100% entspricht hierbei der elektrischen Leitfähigkeit von Kupfer.

Darüber hinaus weist das Material des Verbindungselements vorzugsweise eine Streckgrenze von mindestens 100 MPa, 200 MPa, 300 MPa, 400 MPa, 500 MPa oder 600 MPa auf.

Die Bruchdehnung des Materials des Verbindungselements beträgt dagegen vorzugsweise mindestens 1%, 2%, 5%, 10% oder sogar mindestens 20%.

Das Verbindungselement gehört somit vorzugsweise der Festigkeitsklasse 4.6, 6.8 oder 8.8 an. Die erste Ziffer gibt hierbei multipliziert mit 100 die mechanische Zugfestigkeit in N/mm² an, während das Produkt der beiden Ziffern multipliziert mit 100 die mechanische Streckgrenze in N/mm² definiert. Die Festigkeitsklasse 8.8 definiert also eine Zugfestigkeit von 8x100 N/mm² und eine Streckgrenze von 8x8x100 N/mm².

So handelt es sich bei dem Material des Verbindungselements um eine Kupfer-Chrom-Legierung mit einem Massenanteil von Chrom von 0,2%-1%, 0,3%-0,8% oder 0,4%-0,6%. Zur Erhöhung der mechanischen Festigkeit kann die Kupfer-Chrom-Legierung zusätzlich einen Massenanteil von bis zu 0,2% von Silber, Magnesium, Hafnium, Titan, Zirkonium und/oder Zinn enthalten. Allgemein ist zu erwähnen, dass das erfindungsgemäße Verbindungselement eine äußere Ummantelung aus Kupfer aufweisen kann, um die gewünschte hohe elektrische Leitfähigkeit zu liefern.

Weiterhin ist das Verbindungselement einsetzbar mit einer Stromleiteranordnung (z. B. Stromschienenanordnung) mit mehreren stromführenden Bauteilen (z. B. Stromschienen), die durch ein erfindungsgemäßes Verbindungselement elektrisch und mechanisch miteinander verbunden sind.

Bei den stromführenden Bauteilen kann es sich jedoch beispielsweise auch um einen Kabelschuh, ein Karosserieblech, einen Bootsrumpf, einen Widerstand (z. B. niederohmiger Strommesswiderstand) oder einen Massepunkt an einem Gehäuseteil handeln.

Die Erfindung beansprucht Schutz für ein entsprechendes Herstellungsverfahren zur Herstellung eines solchen Verbindungselements, das einerseits mechanisch ausreichend belastbar und andererseits elektrisch hoch leitfähig ist.

Gemäß der Erfindung sieht das Herstellungsverfahren vor, dass zunächst ein Walzdraht hergestellt wird, der aus einer Kupfer-Chrom-Legierung besteht. Anschließend erfolgt dann ein Lösungsglühen des Walzdrahtes, um die gewünschte Zugfestigkeit zu erreichen. Schließlich wird der Walzdraht dann auf seinen vorgegebenen Nenndurchmesser gezogen.

Nach dem Lösungsglühen des Walzdrahtes und vor dem Ziehen des Walzdrahtes ist in einem zusätzlichen Schritt noch vorgesehen, dass eine Oxidschicht auf dem Walzdraht entfernt wird, insbesondere im Schabezug. Hierbei wird die Oxidschicht auf dem Draht mit einem ringförmigen, scharfen Werkzeug, dessen Innendurchmesser geringer ist als der Außendurchmesser des Drahtes, mechanisch von dem Draht geschabt.

Zur Herstellung des Walzdrahtes wird vorzugsweise zunächst das Material (Kupfer-Chrom-Legierung) in einem Vakuumofen geschmolzen und anschließend zu dem Walzdraht warmgewalzt.

Das vorstehend erwähnte Lösungsglühen des Walzdrahtes umfasst dagegen zunächst ein Erwärmen des Walzdrahtes und anschließend ein Abschrecken des Walzdrahtes, insbesondere in Wasser. Die Erwärmung des Walzdrahtes beim Lösungsglühen erfolgt für eine Dauer von 5-15 Minuten, 7-13 Minuten oder 9-11 Minuten bei einer Temperatur von +800-1200°C, +900-1100°C oder +950-1050°C.

Darüber hinaus kann bei dieser Variante der Erfindung zusätzlich vorgesehen sein, dass der Walzdraht ausgelagert wird, beispielsweise bei einer Temperatur von +300-600°C, +350-550°C oder +400-500°C für eine Zeitdauer von 4-16 Stunden, 6-14 Stunden oder 6-10 Stunden. Anschließend können dann aus dem ausgelagerten Walzdraht die erfindungsgemäßen Verbindungselemente geformt werden, was in herkömmlicher Weise geschehen kann.

Das vorstehend erwähnte Auslagern des Walzdrahtes kann nach dem Lösungsglühen und nach dem Entfernen der Oxidschicht erfolgen.

Es besteht jedoch alternativ auch die Möglichkeit, dass das Auslagern des Walzdrahtes nach dem Lösungsglühen und vor dem Entfernen der Oxidschicht erfolgt.

Bei einer Abwandlung dieser Variante werden die Verbindungselemente aus dem Walzdraht vor dem Auslagern geformt. Anschließend werden die geformten Verbindungselemente dann als Stückgut ausgelagert, beispielsweise bei einer Temperatur von +300-600°C, +350-550°C oder +400-500°C für eine Zeitdauer von 4-16 Stunden, 6-14 Stunden oder 6-10 Stunden.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine schematische Querschnittsansicht einer erfindungsgemäßen Stromschienenanordnung,
- Figur 2: eine schematische Querschnittsansicht einer erfindungsgemäßen Schraube mit einer angeformten Scheibe,
- Figur 3: eine Variante des erfindungsgemäßen Herstellungsverfahrens als Flussdiagramm mit einer KupferChrom-Legierung als Ausgangsmaterial,
- Figur 4: eine Abwandlung von Figur 3,
- Figur 5: eine weitere Abwandlung von Figur 3.

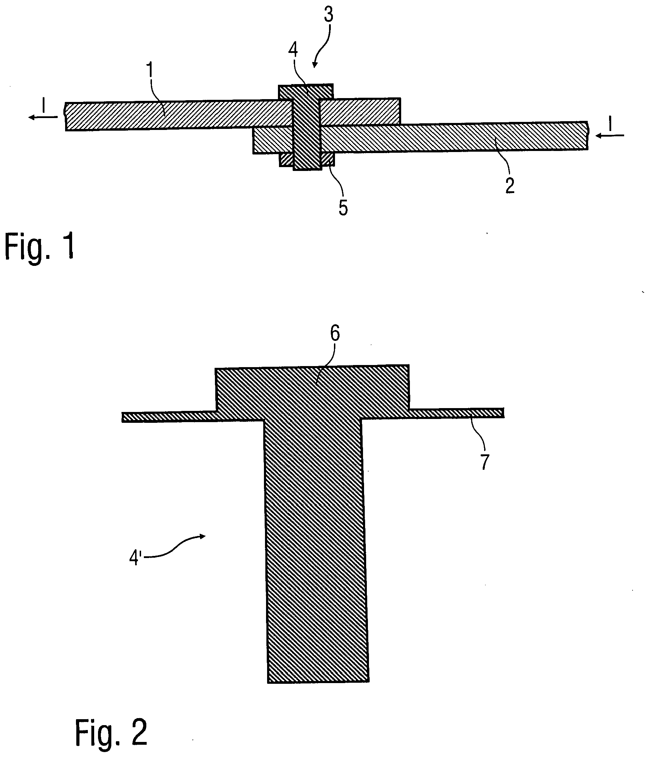

Figur 1 zeigt eine schematische Darstellung einer erfindungsgemäß hergestellten Stromschienenanordnung mit zwei Stromschienen 1, 2 aus Kupfer, wobei die beiden Stromschienen 1, 2 mit ihren freien Enden planparallel aufeinander liegen und durch eine Schraubverbindung 3 elektrisch und mechanisch miteinander verbunden sind.

Die Schraubverbindung 3 besteht hierbei aus einer erfindungsgemäß hergestellten Schraube 4 mit einer entsprechend angepassten Mutter 5.

Die Schraube 4 und die Mutter 5 bestehen hierbei aus einem besonderen Material, das eine hohe mechanische Zugfestigkeit von mindestens 350 MPa mit einer hohen elektrischen Leitfähigkeit von mindestens 50% IACS kombiniert.

Figur 2 zeigt eine Abwandlung einer Schraube 4' mit einem Schraubenkopf 6 mit einer angeformten Scheibe 7, wobei die Scheibe 7 die Auflagefläche des Schraubenkopfs 6 um über 100% erhöht. Dies ist insbesondere dann vorteilhaft, wenn - wie in Figur 1 - relativ weiche Bauteile aus Kupfer miteinander verbunden werden sollen.

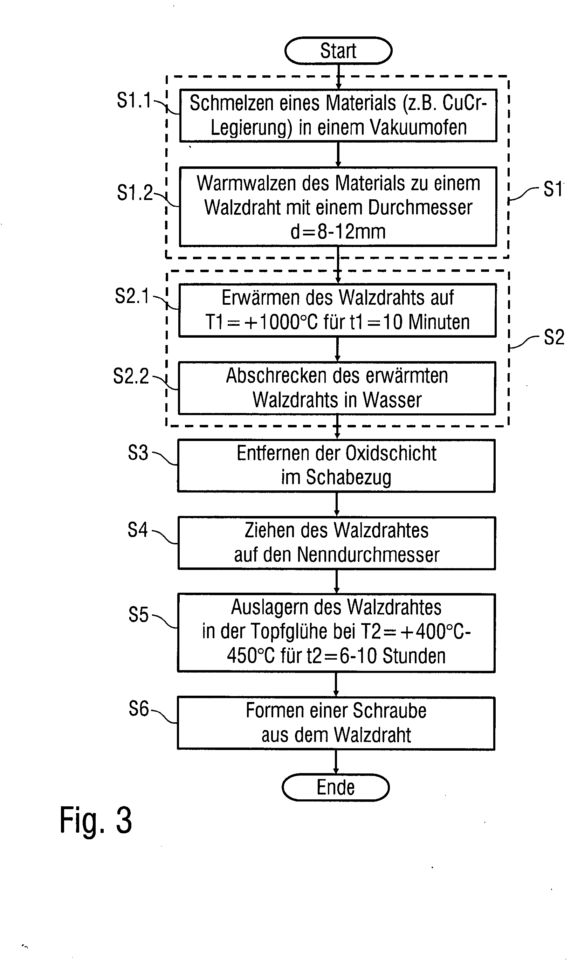

Im Folgenden wird nun zunächst das Flussdiagramm in Figur 3 beschrieben, das eine erste Variante zur Herstellung des Materials für das erfindungsgemäße Verbindungselement beschreibt.

In einem ersten Schritt S1 wird zunächst ein Walzdraht hergestellt. Hierzu wird zunächst in einem Schritt S1.1 ein geeignetes Material (Kupfer-Chrom-Legierung) in einem Vakuumofen geschmolzen. Anschließend wird das Material dann in einem Schritt S1.2 zu dem gewünschten Walzdraht mit einem Durchmesser von d=8-12 mm gewalzt.

In einem anschließenden Schritt S2 erfolgt dann ein Lösungsglühen des Walzdrahtes. Im Rahmen des Lösungsglühens wird der Walzdraht zunächst in einem Schritt S2.1 für eine Zeitdauer t1=10 Minuten auf eine Temperatur von T1=+1000°C erwärmt. Anschließend wird der erwärmte Walzdraht dann in einem Schritt S2.2 in Wasser abgeschreckt.

In einem weiteren Schritt S3 wird dann die Oxidschicht auf dem Walzdraht im Schabezug entfernt. Hierbei wird die Oxidschicht auf dem Walzdraht mit einem ringförmigen, scharfen Werkzeug mechanisch vom Draht geschabt, wobei der Innendurchmesser des Werkzeugs geringer ist als der Außendurchmesser des Walzdrahts.

In einem Schritt S4 wird der Walzdraht dann in herkömmlicher Weise auf den gewünschten Nenndurchmesser gezogen.

Anschließend erfolgt in einem Schritt S5 ein Auslagern des Walzdrahtes in der Topfglühe bei einer Temperatur von T2=+400-450°C für einen Zeitraum t2=6-10 Stunden.

Nach diesen Schritten hat das Material dann eine Zugfestigkeit von rund 400 MPa, eine Bruchdehnung von 10% und eine elektrische Leitfähigkeit von mehr als 85% IACS erreicht.

In einem weiteren Schritt S6 wird dann eine Schraube aus dem Walzdraht geformt.

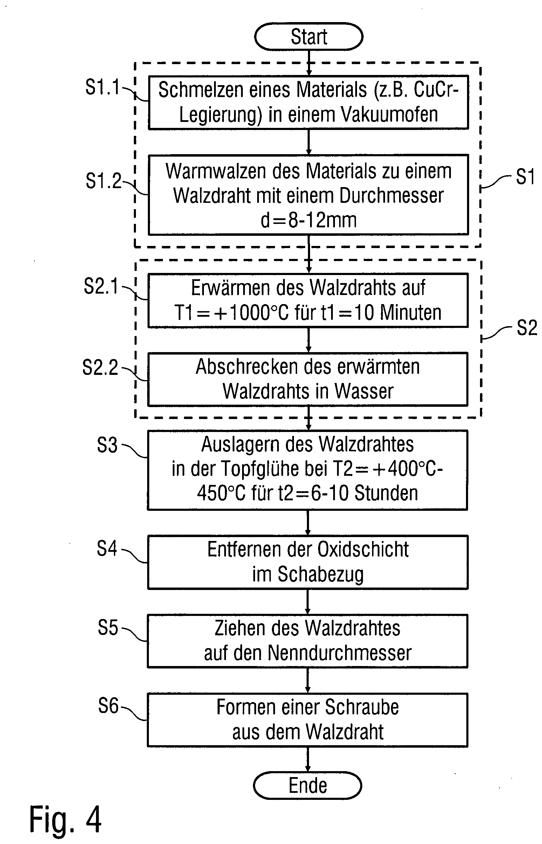

Das Ausführungsbeispiel gemäß Figur 4 stimmt weitgehend mit dem vorstehend beschriebenen und in Figur 3 dargestellten Ausführungsbeispiel überein, so dass zur Vermeidung von Wiederholungen auf die vorstehende Beschreibung zu Figur 3 verwiesen wird.

Eine Besonderheit dieses Ausführungsbeispiels besteht darin, dass das Auslagern des Walzdrahts von dem Schritt S5 in Figur 3 in den Schritt S3 in Figur 4 verschoben ist. Das Auslagern des Walzdrahtes erfolgt hierbei also zeitlich vor dem Entfernen der Oxidschicht im Schabezug und auch vor dem Ziehen des Walzdrahtes.

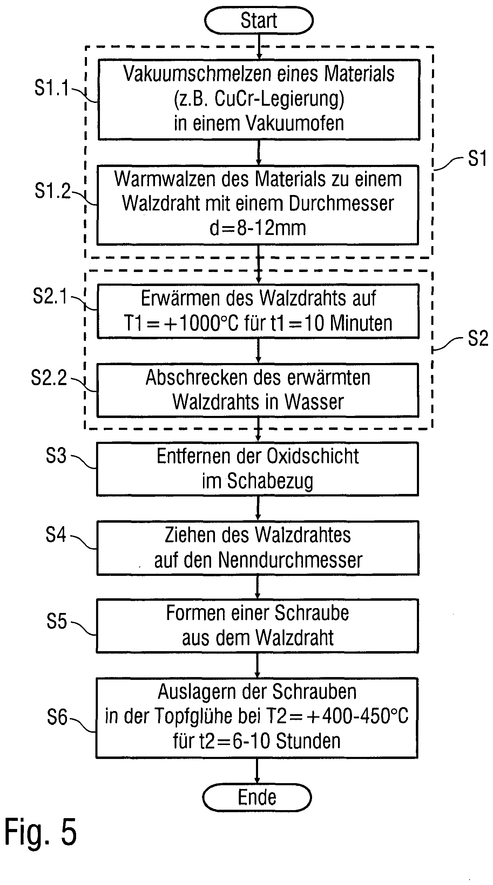

Das Ausführungsbeispiel gemäß Figur 5 stimmt ebenfalls weitgehend mit dem Ausführungsbeispiel gemäß Figur 3 überein, so dass zur Vermeidung von Wiederholungen auf die vorstehende Beschreibung zu Figur 3 verwiesen wird.

Eine Besonderheit dieses Ausführungsbeispiels besteht in der Vertauschung der Schritte S5 und S6 in Figur 3. Dies bedeutet, dass zunächst in einem Schritt S5 die einzelnen Schrauben aus dem Walzdraht geformt werden und anschließend dann die geformten Schrauben als Stückgut in einem Schritt S6 ausgelagert werden.

### Bezugszeichenliste:

- 1: Stromschiene
- 2: Stromschiene
- 3: Schraubverbindung
- 4: Schraube
- 4': Schraube
- 5: Mutter
- 6: Schraubenkopf
- 7: Scheibe

## Patentansprüche

1. Herstellungsverfahren zur Herstellung eines Verbindungselements (4, 4', 5, 8), nämlich eines Niets, eines Bolzens oder einer Mutter (5) mit folgenden Schritten:
a) Herstellen eines Walzdrahts aus einem Material, wobei das Material
a1) eine mechanische Zugfestigkeit von mindestens 350 MPa aufweist,
a2) eine elektrische Leitfähigkeit von mindestens 50% IACS aufweist, und
a3) eine Kupfer-Chrom-Legierung mit einem Massenanteil von Chrom von 0,2%-1% ist,
wobei das Herstellen des Walzdrahtes folgende Schritte umfasst:
a4) Schmelzen des Materials in einem Vakuumofen und anschließend
a5) Warmwalzen des Materials zu dem Walzdraht,
b) Lösungsglühen des Walzdrahts
b1) für eine Dauer von 5-15 Minuten
b2) bei einer Temperatur von +800°C bis +1200°C,
wobei das Lösungsglühen des Walzdrahts folgende Schritte umfasst:
b3) Erwärmen des Walzdrahts,
b4) Abschrecken des Walzdrahts,
c) Entfernen einer Oxidschicht auf dem Walzdraht,
d) Ziehen des Walzdrahts auf einen vorgegebenen Nenndurchmesser.

2. Herstellungsverfahren nach Anspruch 1, **gekennzeichnet durch** folgende Schritte in dieser Reihenfolge:
a) Auslagern des Walzdrahtes,
b) Formen von Verbindungselementen aus dem ausgelagerten Walzdraht.

3. Herstellungsverfahren nach Anspruch 2,
**dadurch gekennzeichnet,**
a) **dass** das Auslagern des Walzdrahtes nach dem Lösungsglühen und nach dem Entfernen der Oxidschicht erfolgt oder
b) **dass** das Auslagern des Walzdrahtes nach dem Lösungsglühen und vor dem Entfernen der Oxidschicht erfolgt.

4. Herstellungsverfahren nach Anspruch 1, **gekennzeichnet durch** folgende Schritte in dieser Reihenfolge:
a) Formen von Verbindungselementen aus dem Walzdraht vor dem Auslagern,
b) Auslagern der geformten Verbindungselemente.

## Claims

1. Manufacturing method for manufacturing a connecting element (4, 4', 5, 8), namely a rivet, a bolt or a nut (5), comprising the following steps:
a) producing a wire rod from a material in which the material
a1) has a mechanical tensile strength of at least 350 MPa,
a2) has an electrical conductivity of at least 50% IACS, and
a3) is a copper-chromium alloy having a chromium mass fraction of 0.2%-1%,
wherein the manufacturing of the wire rod comprises the steps of:
a4) melting said material in a vacuum furnace, and subsequently
a5) hot rolling of the material into the wire rod,
b) solution annealing of the wire rod
b1) for a duration of 5-15 minutes
b2) at a temperature of +800°C to +1200°C,
wherein the solution annealing of the wire rod comprises the following steps:
b3) heating the wire rod,
b4) quenching of the wire rod,
c) removal of an oxide layer on the wire rod,
d) drawing the wire rod to a specified nominal diameter.

2. Manufacturing method according to claim 1, **characterised by** the following steps in this order:
a) ageing of the wire rod,
b) forming of connecting elements from the aged wire rod.

3. Manufacturing method according to claim 2, **characterized in**
a) **that** the ageing of the wire rod takes place after solution annealing and after removal of the oxide layer; or
b) **that** the ageing of the wire rod takes place after the solution annealing and before the removal of the oxide layer.

4. Manufacturing method according to claim 1, **characterized by** the following steps in this order:
a) forming connecting elements from the wire rod prior to the ageing,
b) ageing of the moulded connecting elements.

## Revendications

1. Procédé de fabrication servant à fabriquer un élément de liaison (4, 4', 5, 8), à savoir un rivet, un boulon ou un écrou (5), avec les étapes suivantes :
a) fabrication d'un fil laminé à partir d'un matériau, dans lequel le matériau
a1) présente une résistance à la traction mécanique d'au moins 350 MPa,
a2) présente une conductivité électrique d'au moins 50 % IACS, et
a3) est un alliage de cuivre et de chrome avec une fraction en poids de chrome de 0,2 % à 1 %,
dans lequel la fabrication du fil laminé comprend les étapes suivantes :
a4) fusion du matériau dans un four à vide puis
a5) laminage à chaud du matériau en le fil laminé,
b) recuit de mise en solution du fil laminé
b1) pour une durée de 5 à 15 minutes,
b2) à une température de +800 °C à + 1200 °C,
dans lequel le recuit de mise en solution du fil laminé comprend les étapes suivantes :
b3) réchauffage du fil laminé,
b4) trempe du fil laminé,
c) élimination d'une couche d'oxyde sur le fil laminé,
d) étirage du fil laminé sur un diamètre nominal prédéfini.

2. Procédé de fabrication selon la revendication 1, **caractérisé par** les étapes suivantes dans cet ordre :
a) transfert du fil laminé,
b) façonnage d'éléments de liaison à partir du fil laminé transféré.

3. Procédé de fabrication selon la revendication 2,
**caractérisé en ce**
a) **que** le transfert du fil laminé est effectué après le recuit de mise en solution et après l'élimination de la couche d'oxyde ou
b) **que** le transfert du fil laminé est effectué après le recuit de mise en solution et avant l'élimination de la couche d'oxyde.

4. Procédé de fabrication selon la revendication 1, **caractérisé par** les étapes suivantes dans cet ordre :
a) façonnage d'éléments de liaison à partir du fil laminé avant le transfert,
b) transfert des éléments de liaison façonnés.
